# EUROPEAN PATENT APPLICATION

(11) **EP 4 697 861 A1**
(43) Date of publication of application: **18.02.2026**
(21) Application number: 25195362.6
(22) Date of filing: 12.08.2025
(51) Int. Cl.: H05B 3/84

(54) **AUTOMOTIVE GLAZING HEATING SYSTEM WITH INDEPENDENT ZONE ACTIVATION**

(30) Priority: 12.08.2024 US 202418800779
(71) Applicant: Tesla, Inc., Austin, TX 78725 (US)
(72) Inventor: MURTHY, Aditya Suresh, Austin, Texas 78725 (US); ROCCHIO, Matthew Robert, Austin, Texas 78725 (US); GOUGOUSSIS, Christos, Austin, Texas 78725 (US)
(74) Representative: Bryn-Jacobsen, Caelia

(57) **Abstract**

An automotive glazing heating system with independent zone activation, designed to efficiently manage the defrosting and defogging of automotive glazing elements such as windshields. The system allows for the independent control of multiple heating zones across the surface of the glazing, enabling precise and efficient management of thermal energy distribution. A control unit manages the activation of the heating zones based on various inputs, optimizing the vehicle's low voltage power consumption. The system also ensures compatibility with vehicle electronics and sensor systems, such as those used in advanced driver-assistance systems (ADAS), by allowing for selective heating of areas in front of these devices.

## Description

### TECHNICAL FIELD

The present disclosure relates to the technical field of automotive glazing systems, specifically to systems and methods for heating automotive glass.

### BACKGROUND

Automotive glazing, such as windshields and windows, are often an essential component of vehicle design, providing structural integrity, visibility, and protection from external elements for the occupants. A common challenge associated with automotive glazing is the accumulation of ice, frost, or fog, which can obstruct the driver's view and impair the functioning of vehicle-mounted cameras essential for advanced driver-assistance systems (ADAS).

Traditionally, automotive glazing heating solutions have utilized uniform heating elements embedded within or applied onto the glass surface to defrost or defog the entire pane. While somewhat effective in providing clear visibility, these systems often require significant energy consumption and may not offer the flexibility needed to address localized visibility issues or to operate efficiently under varying environmental conditions.

Furthermore, the integration of vehicle antennas and the need to maintain the functionality of ADAS cameras present additional complexities in the design of automotive glazing heating systems. The presence of metallic coatings used for heating can interfere with signal transmission, necessitating design considerations that balance heating functionality with the operational requirements of vehicle communication systems and onboard sensors.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a diagram depicting an example of an automotive glazing with independent zone activated heating system, according to some examples.
FIG. 2 is a diagram depicting an example of an automotive glazing heating system with independent zone activation, according to some examples.
FIG. 3 is a diagram depicting an example of a vehicle with an automotive glazing heating system with independent zone activation, according to some examples.
FIG. 4 is a flowchart describing a method of providing segmented heating for automotive glazing, according to certain examples.
FIG. 5 is a flowchart describing a method of manufacturing an automotive glazing with independent zone activated heating, according to some examples.

### DETAILED DESCRIPTION

Some examples herein seek to address the abovementioned challenges by improving energy efficiency, providing enhanced visibility under diverse conditions, and ensuring compatibility with vehicle electronics and ADAS components. Some examples address the challenge of efficiently managing the defrosting and defogging of automotive glazing, such as windshields, in vehicles. Existing systems typically heat the entire glass surface uniformly, which can lead to unnecessary energy consumption and may not provide targeted defogging or defrosting where it is most needed, such as in the driver's line of sight or over vehicle-mounted cameras. Additionally, the use of metallic coatings in traditional heating systems can interfere with vehicle antennas and ADAS cameras, leading to compromised vehicle functionality. Some examples seek to overcome these limitations by providing a more energy-efficient and targeted heating solution that is compatible with vehicle electronics and sensor systems.

According to certain examples, an automotive glazing heating system with independent zone activation is described. The system allows for the independent control of multiple heating zones across the surface of the glazing, enabling a more precise and efficient management of thermal energy distribution. A plurality of segmented heating zones are designed to correspond with specific areas of the transparent pane of the automotive glazing, such as those prone to higher moisture accumulation or critical viewing areas for drivers and sensors.

A control unit manages the activation of the heating zones. According to certain examples, the control unit may respond to a variety of inputs, including inputs received via a user interface, real-time weather conditions, vehicle operational status such as speed or engine temperature, and sensor data indicating the presence of condensation or ice. This targeted activation ensures that energy is not wasted on heating areas of the glazing that do not require defrosting or defogging, thereby optimizing the vehicle's low voltage power consumption.

Moreover, some examples consider a need to maintain the functionality of vehicle-mounted cameras and antennas. By allowing for the selective heating of areas in front of these devices, some examples seek to ensure that visibility and signal transmission are not compromised. This can be particularly important for maintaining the effectiveness of ADAS, which rely on clear camera views for safe operation.

In some examples, the system may receive inputs to customize or define a heating pattern based on inputs received via a vehicle interface. Users can prioritize which zones to heat based on their needs, further enhancing the system's efficiency and responsiveness. For example, the control unit may activate the camera zone's heating element when sensors detect moisture or condensation that could obstruct the camera's view, or it may activate the wiper zone's heating element when temperatures drop to a point where the wipers are at risk of freezing to the glass.

In some examples, the system utilizes thresholds, such as temperature thresholds, to determine when to activate one or more of the segmented heating zones on the automotive glazing. For example, the control unit may be equipped with various sensors, such as temperature sensors, or is configured to receive sensor data from a diagnostic system associated with a vehicle. Accordingly, the control unit may be programmed with predefined temperature thresholds that serve as activation criteria for the heating zones.

For example, the system may be set to activate the heating zone in front of the driver's line of sight when the external temperature falls below a certain threshold, indicating the potential for ice formation. Similarly, the heating zone over the camera area may be activated when the temperature and humidity conditions suggest a likelihood of fogging, which could impair the camera's functionality.

In addition to temperature, the system may consider other factors, such as the presence of moisture or ice detected by additional sensors, to refine the decision-making process for activating the heating zones. This ensures that the heating system operates only when necessary, maintaining optimal visibility through the automotive glazing while conserving energy.

According to certain examples, a metallic coating applied to one or more of an inner and outer surface of the transparent pane of the glazing is segmented into zones designated for different functions. As described above, these zones are independently powered and controlled, for example allowing for the heating of the driver's vision area, camera zones, and wiper blade areas as needed.

According to certain examples, the segmentation is achieved through precise techniques such as laser ablation, which creates gaps between zones to ensure electrical isolation, or mechanical etching and masking, which can be used to tailor the heating elements to the specific contours and requirements of the vehicle's glazing.

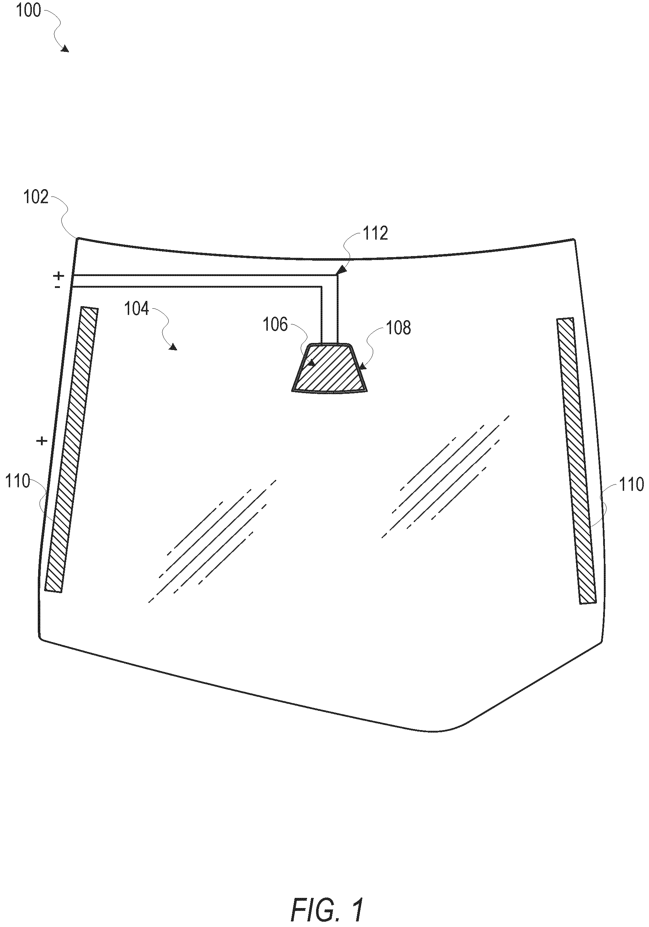

**FIG. 1** is a diagram 100 depicting an example of an automotive glazing 102 with an independent zone activated heating system. According to certain examples, an automotive glazing 102, which may be a windshield, rear window, or side window of a vehicle, includes at least a first heating zone 104 and a second heating zone 106.

As seen in the diagram 100, in some examples the first heating zone 104 may comprise an area that covers a substantial portion of the automotive glazing 102, providing general defrosting and defogging capabilities. This zone can be activated to clear the driver's field of vision or to ensure overall visibility through the automotive glazing 102 under certain conditions, such as cold weather or high humidity.

The second heating zone 106 is positioned to correspond with the field of view of a sensor device mounted upon or adjacent to the automotive glazing 102. The sensor device may be a camera, LiDAR, or any other sensor that requires a clear line of sight through the glazing to function correctly. The second heating zone 106 is specifically designed to prevent occlusion of the sensor's field of view by condensation, ice, or fog, ensuring the uninterrupted operation of the sensor device.

A gap 108 separates the first heating zone 104 and the second heating zone 106. The gap 108 is an unheated area that electrically isolates the two zones, allowing for independent control of heating. The gap 108 can be formed by various methods known to those skilled in the art, such as laser ablation, mechanical etching, or masking techniques during the manufacturing process of the automotive glazing 102.

In some examples, the system may include a control unit (not shown in **FIG. 1**) that is configured to independently activate the first heating zone 104 and the second heating zone 106. The control unit can receive inputs from temperature sensors, moisture sensors, or manual inputs from the vehicle's user interface to determine when and which heating zones should be activated. For example, the control unit may activate the second heating zone 106 when the temperature falls below a predetermined threshold or when moisture is detected within the sensor's field of view.

As seen in the diagram 100, the heating zones 104, 106 are equipped with a first set of bus bars 110 and a second set of bus bars 112 that supply electrical power to the respective zones. The bus bars are designed to distribute electrical power evenly across each heating zone, ensuring uniform heating and preventing cold spots.

According to certain examples, the first set of bus bars 110 is configured to distribute electrical power across the first heating zone 104. These bus bars are strategically placed and designed to ensure even heating throughout the zone, preventing any cold spots that could lead to partial visibility. The bus bars may be made of a conductive material, such as copper or a silver alloy, and are embedded within or affixed to the surface of the automotive glazing 102 in a pattern that optimizes the thermal distribution.

Similarly, the second set of bus bars 112 is associated with the second heating zone 106 and is responsible for delivering electrical power specifically to this zone. The design and placement of the second set of bus bars 112 are tailored to the smaller size and specific shape of the second heating zone 106, ensuring precise heating to maintain the clarity of the sensor device's field of view without wasting energy on unnecessary areas.

In some examples, the automotive glazing 102 may include additional heating zones, which are not shown in FIG. 1, tailored to other specific needs, such as areas prone to icing where windshield wipers rest or regions that align with other critical sensors on the vehicle. The design and placement of these additional heating zones can be based on the vehicle's design and operational requirements.

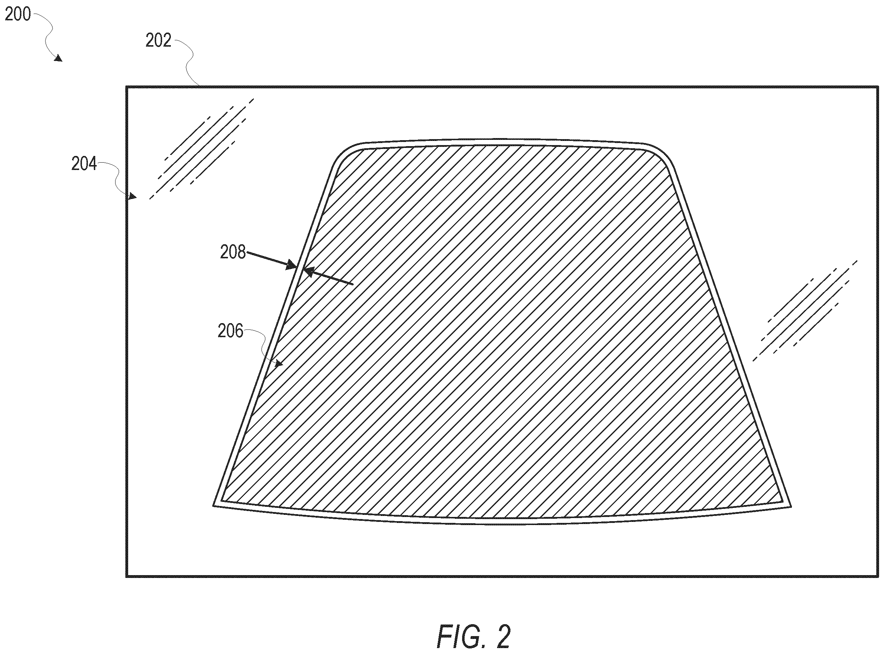

**FIG. 2** is a diagram 200 depicting an example of an automotive glazing heating system 202 with independent zone activation. As seen in the diagram 200, the automotive glazing system 202 features a first heating zone 204 and a second heating zone 206, each tailored to specific defrosting or defogging requirements of the automotive glazing.

The first heating zone 204 is a broad area that may encompass the majority of the automotive glazing, providing a general heating capability to maintain clear visibility for the driver under a variety of environmental conditions. The second heating zone 206, which is depicted as being completely surrounded by the first heating zone 204, is a specialized area that may correspond to the field of view of a critical sensor or camera mounted on the vehicle. The second heating zone 206 is designed to ensure that the sensor or camera retains a clear line of sight through the glazing, free from any visual obstructions caused by condensation, ice, or fog.

According to certain examples, the automotive glazing heating system 202 includes a gap 208 that isolates the first heating zone 204 from the second heating zone 206. The gap 208 serves as an electrical barrier, ensuring that each heating zone can be operated independently without interference from the other. The gap 208 may be formed using precision techniques such as laser ablation, which removes a portion of the coating to create a clear separation, or through mechanical etching or masking processes during the manufacturing of the glazing. The width and properties of the gap 208 may be determined based on the voltage levels used and the specific heating requirements of the zones.

In some examples, the coating applied to the respective heating zones may vary in composition to enhance certain properties as needed by each zone. For instance, the coating in the first heating zone 204 may be formulated for rapid and uniform heating across a large area, while the coating in the second heating zone 206 may be optimized for quick response and high transparency to not impede the sensor's functionality. The coatings can include materials such as conductive metallic elements, which may be layered or alloyed to achieve the desired electrical and optical characteristics. According to certain examples, the conductive metallic elements may comprise one or more of silver, gold, dielectric compounds like silicon nitride, silicon oxide, zinc oxide, tin oxide, titanium oxide, indium oxide or a combination of such materials, or carbon compounds such as graphene or nanotubes.

Bus bars are utilized to supply electrical power to the heating zones. In the case of the second heating zone 206, a set of bus bars (not shown in **FIG. 2**) is carefully positioned to connect to this zone without compromising the isolation provided by the gap 206. The bus bars may be arranged in a pattern that follows the perimeter of the second heating zone 206, ensuring even distribution of heat and maintaining the integrity of the isolation from the first heating zone 204.

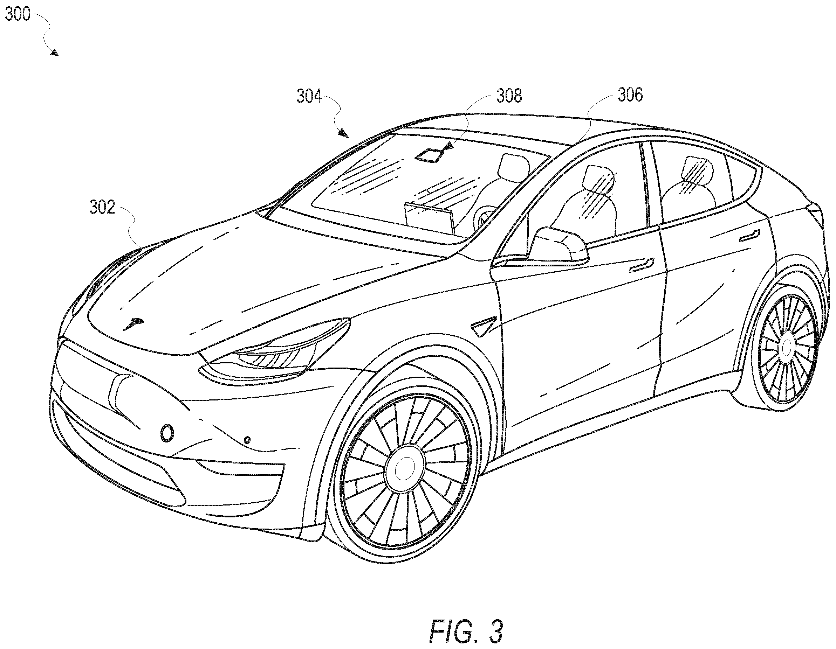

**FIG. 3** is a diagram 300 depicting an example of a vehicle 302 with an automotive glazing heating system 304 with independent zone activation. As depicted in the diagram 300, the automotive glazing heating system 304 may be applied to a windshield 306 of the vehicle 302.

According to certain examples, the windshield 306 includes an automotive glazing heating system 304, which incorporates multiple heating zones as described in **FIG. 1** and **FIG. 2****,** that can be activated independently to defrost or defog specific areas of the windshield 306 as needed.

An integrated sensor 308, which includes a camera, is mounted on the vehicle 302 in a position that corresponds with a heating zone from among a plurality of heating zones of the automotive glazing heating system 304. For example, the camera may be part of an advanced driver-assistance system (ADAS) and is used for functions such as lane departure warnings, adaptive cruise control, or automated emergency braking. To ensure the camera's optimal performance, particularly in cold or humid conditions that can lead to windshield obstructions, the automotive glazing heating system 304 is configured to provide targeted heating in the area of the windshield 306 that corresponds with the camera's field of view.

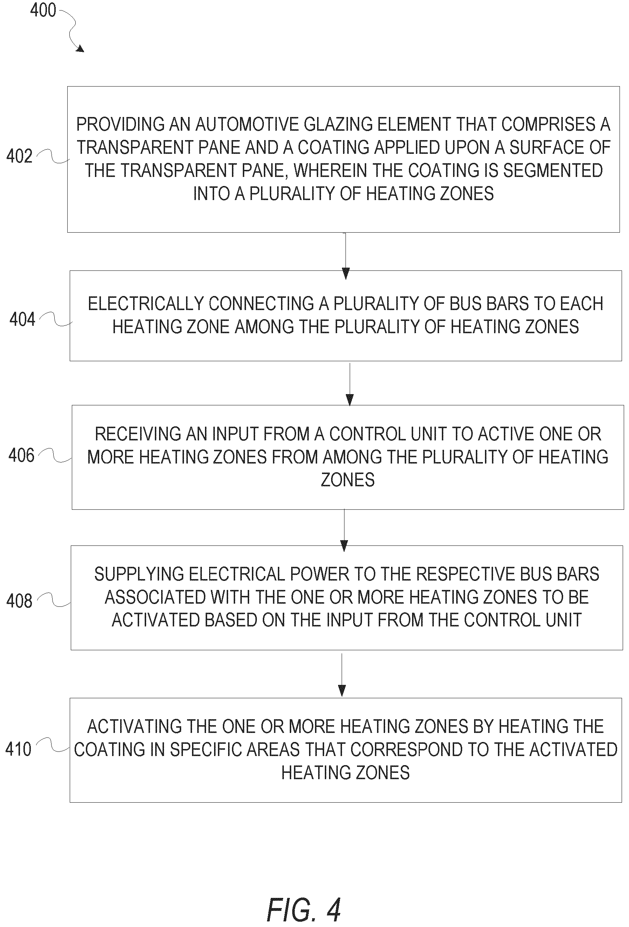

**FIG. 4** is a flowchart describing a method 400 of providing segmented heating for automotive glazing, according to certain examples. The method 400 describes a system for selective heating of different zones of automotive glazing, such as the automotive glazing depicted in FIG. 3, to maintain clear visibility and to address specific needs such as defrosting or defogging areas critical for sensor operation.

At operation 402, the method begins with providing an automotive glazing element that includes a transparent pane. A coating is applied upon a surface of the transparent pane, wherein the coating is segmented into a plurality of heating zones. The transparent pane typically forms part of a vehicle's windshield, rear window, or side windows. The coating may be a conductive material, such as a metallic coating, that facilitates the transfer of heat when an electrical current is applied. The segmentation of the coating into heating zones is achieved through methods such as laser ablation, mechanical etching, or masking, creating distinct areas that can be independently heated.

At operation 404, a plurality of bus bars are electrically connected to each heating zone among the plurality of heating zones. The bus bars are conductive strips that distribute electrical power to the heating zones and are designed to ensure uniform heating across each zone. The bus bars can be made from materials such as copper or aluminum and are configured to match the shape and size of the respective heating zones they serve.

At operation 406, an input is received from a control unit to activate one or more heating zones from among the plurality of heating zones. The control unit processes information from various sensors, such as temperature, humidity, or optical sensors, to determine the need for activation of specific heating zones. The control unit may also receive manual inputs from the vehicle's user interface, allowing the driver to control the heating zones as desired.

At operation 408, electrical power is supplied to the respective bus bars associated with the one or more heating zones to be activated based on the input from the control unit. The control unit manages the power supply by adjusting the voltage or current to the bus bars, which may involve modulation techniques such as pulse-width modulation (PWM) to control the intensity of the heating.

At operation 410, the one or more heating zones are activated by heating the coating in specific areas corresponding to the activated heating zones. The activation of the heating zones results in the defrosting or defogging of the corresponding areas of the transparent pane, ensuring clear visibility through the automotive glazing.

Although the described flow diagram can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

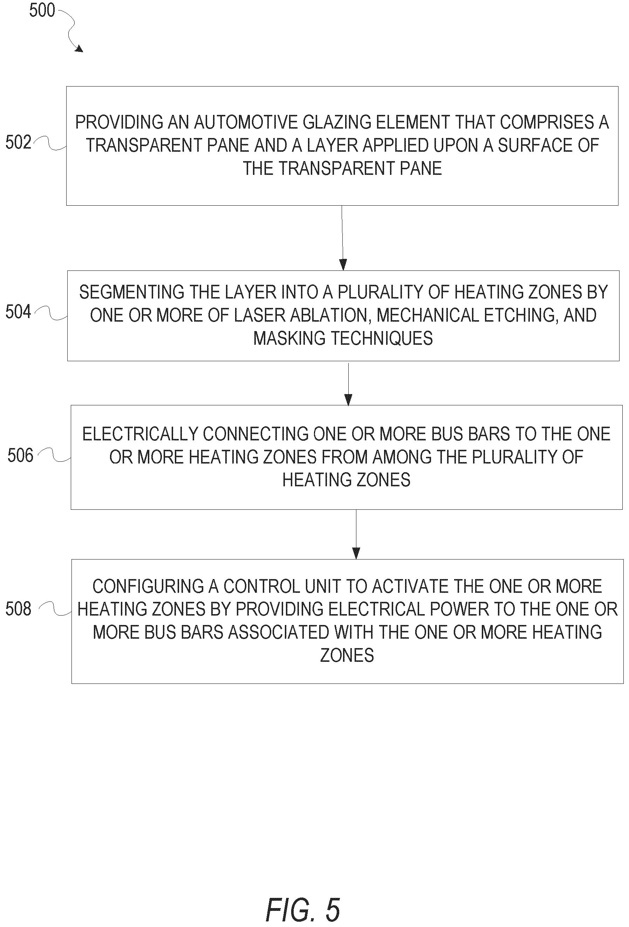

**FIG. 5** is a flowchart describing a method 500 of manufacturing an automotive glazing with independent zone activated heating, according to some examples.

At operation 502, the method begins with providing an automotive glazing element that includes a transparent pane. A layer is applied upon a surface of the transparent pane, which is intended to be heated to defrost or defog the pane. The layer may include a variety of material applications that serve the primary function of enabling the transparent pane to heat when electrical current is applied. According to certain examples, the layer may include one or more of; a coating, which is a thin film typically applied through spraying, dipping, or brushing, composed of conductive materials such as metallic elements; a substrate; a finish, such as a surface treatment that possess conductive properties to facilitate heating; a membrane, that includes a flexible, thin sheet comprising conductive polymers that generate heat in response to electrical stimuli; an overlay that comprises a conductive material adhered to the pane or applied directly to it; a plating that comprises a deposition of a conductive metal layer onto the panes surface, for example by electroplating; a laminate that comprises a composite of multiple bonded layers, where one or more layers include conductive materials for heat generation; and a film that comprises a composite material with conductive elements that enable it to act as a heating zone when electrified.

According to certain examples, the layers specific form-be it a coating, substrate, finish, membrane, overlay, plating, laminate, or film-is selected based on the heating system's required properties, such as conductivity, transparency, and durability.

At operation 504, the applied layer is segmented into a plurality of heating zones. This segmentation is achieved by employing one or more of the following techniques: laser ablation, mechanical etching, and masking techniques. Laser ablation involves using a laser to precisely remove material from the layer to create isolated zones. Mechanical etching involves physically removing material from the layer, and masking involves covering parts of the layer during the application process to create distinct zones. These techniques ensure that each heating zone can be controlled independently without interference from adjacent zones.

At operation 506, one or more bus bars are electrically connected to one or more heating zones from among the plurality of heating zones. The bus bars are conductive elements that supply electrical power to the heating zones. They are designed to match the shape and size of the heating zones and are strategically placed to ensure even distribution of electrical power, which in turn allows for uniform heating of the zones.

At operation 508, a control unit is configured to activate the one or more heating zones from among the plurality of heating zones. The control unit is programmed to provide electrical power to the one or more bus bars associated with the one or more heating zones. The control unit can receive inputs from various sources, such as manual inputs from a vehicle's user interface or sensor inputs that indicate environmental conditions or the presence of condensation or ice on the transparent pane. The control unit processes these inputs to determine which heating zones need to be activated to optimize visibility through the automotive glazing.
1. A system for heating automotive glazing, the system comprising:
   an automotive glazing element having a transparent pane;
   a layer applied to a surface of the transparent pane, the layer comprising a plurality of heating zones, each heating zone corresponding to a specific area of the transparent pane;
   one or more bus bars electrically connected to one or more heating zones from among the plurality of heating zones to supply electrical power to each heating zone; and
   a control unit to activate one or more heating zones from among the plurality of heating zones by supplying the electrical power to a respective bus bar.
2. The system for heating the automotive glazing of clause 1, wherein the coating includes a metallic coating.
3. The system for heating the automotive glazing of clause 1, wherein the coating is segmented by one or more gaps between adjacent heating zones that isolate each heating zone from among the plurality of heating zones.
4. The system for heating the automotive glazing of clause 3, wherein the one or more gaps are formed by one or more of laser ablation, mechanical etching, and masking techniques.
5. The system for heating the automotive glazing of clause 1, wherein the control unit activates each heating zone based on predetermined criteria that includes one or more of:
   a weather condition;
   a vehicle operational status; and
   a sensor input that indicates condensation on the transparent pane.
6. The system for heating the automotive glazing of clause 1, wherein the control unit activates one or more of the heating zones from among the plurality of heating zones based on an input received via a user interface.
7. The system for heating the automotive glazing of clause 6, wherein the input includes an identification of a heating zone from among the plurality of heating zones.
8. The system for heating the automotive glazing of clause 1, wherein at least one of the heating zones from among the plurality of heating zones is positioned in alignment with a field of view of a camera.
9. The system for heating the automotive glazing of clause 1, wherein the plurality of heating zones include a first heating zone and a second heating zone, the first heating zone corresponding with a first activation criteria, and the second heating zone corresponding with a second activation criteria.
10. The system for heating the automotive glazing of clause 1, wherein the automotive glazing includes a windshield.
11. The system for heating the automotive glazing of clause 1, wherein the transparent pane comprises an outer surface and an inner surface, and wherein the coating is applied upon the inner surface of the transparent pane.
12. The system for heating the automotive glazing of clause 1, wherein the plurality of heating zones include a first heating zone that encompasses a substantial portion of the transparent pane, and a second heating zone, wherein the second heating zone is smaller in size relative to the first heating zone.
13. A method for heating automotive glazing comprising:
   providing an automotive glazing element comprising a transparent pane and a layer applied upon a surface of the transparent pane, wherein the layer is segmented into a plurality of heating zones;
   electrically connecting one or more bus bars to one or more heating zones from among the plurality of heating zones;
   receiving an input from a control unit to activate one or more heating zones from among the plurality of heating zones;
   supplying electrical power to the respective bus bars associated with the one or more heating zones to be activated based on the input from the control unit; and
   activating the one or more heating zones by heating the coating in specific areas corresponding to the activated heating zones.
14. The method for heating automotive glazing of clause 13, wherein the one or more heating zones are controlled independently.
15. The method for heating automotive glazing of clause 13, wherein the layer includes a metallic coating.
16. The method for heating automotive glazing of clause 13, wherein at least one of the heating zones from among the plurality of heating zones is positioned in alignment with a field of view of a camera.
17. The method for heating automotive glazing of clause 13, wherein the receiving the input from the control unit to activate the one or more heating zones from among the plurality of heating zones includes:
   detecting an activation criteria; and
   causing the control unit to activate the one or more heating zones based on the activation criteria.
18. The method for heating automotive glazing of clause 17, wherein the activation criteria includes sensor inputs that indicate condensation on the transparent pane.
19. The method for heating automotive glazing of clause 13, wherein the coating is segmented into the plurality of heating zones by one or more of laser ablation, mechanical etching, and masking techniques.
20. A method of manufacturing an automotive glazing assembly comprising:
   providing an automotive glazing element comprising a transparent pane and a layer applied upon a surface of the transparent pane;
   segmenting the layer into a plurality of heating zones by one or more of laser ablation, mechanical etching, and masking techniques;
   electrically connecting one or more bus bars to one or more heating zones from among the plurality of heating zones; and
   configuring a control unit to activate the one or more heating zones from among the plurality of heating zones by providing electrical power to the one or more bus bars associated with the one or more heating zone.

### GLOSSARY

**Automotive Glazing:** A term referring to the glass components of a vehicle, which include the windshield, side windows, rear window, and sometimes sunroof. Automotive glazing provides structural integrity, visibility, and protection from external elements for the occupants.

**Laser Ablation:** A precision technique used to remove material from a surface, in this context, to create gaps in the coating of an automotive glazing element to segment heating zones.

**Mechanical Etching:** A process that involves physically removing material from a surface to create patterns or designs, used here to segment heating zones in automotive glazing.

**Masking Techniques:** Methods used during the manufacturing process to protect certain areas of a surface while applying a coating or other treatment to the rest of the surface. In automotive glazing, this can be used to create segmented heating zones.

**Pulse-Width Modulation (PWM):** A method of controlling the power supplied to an electrical device by modulating the width of the voltage pulses in a signal.

**Metallic Coating:** A layer of metallic material applied to a surface, such as a transparent pane, to provide conductive properties for heating purposes.

**Sensor Device:** An electronic component or system, such as a camera or LiDAR, mounted on a vehicle that requires a clear line of sight through the automotive glazing to function correctly.

**Advanced Driver-Assistance Systems (ADAS):** A suite of technologies and electronic systems in vehicles that assist the driver in the driving process and enhance vehicle safety.

## Claims

1. A system for heating automotive glazing, the system comprising:
an automotive glazing element having a transparent pane;
a layer applied to a surface of the transparent pane, the layer comprising a plurality of heating zones, each heating zone corresponding to a specific area of the transparent pane;
one or more bus bars electrically connected to one or more heating zones from among the plurality of heating zones to supply electrical power to each heating zone; and
a control unit to activate one or more heating zones from among the plurality of heating zones by supplying the electrical power to a respective bus bar.

2. The system for heating the automotive glazing of claim 1, wherein the coating includes a metallic coating.

3. The system for heating the automotive glazing of any one of the preceding claims, wherein the coating is segmented by one or more gaps between adjacent heating zones that isolate each heating zone from among the plurality of heating zones.

4. The system for heating the automotive glazing of claim 3, wherein the one or more gaps are formed by one or more of laser ablation, mechanical etching, and masking techniques.

5. The system for heating the automotive glazing of any one of the preceding claims, wherein the control unit activates each heating zone based on predetermined criteria that includes one or more of:
a weather condition;
a vehicle operational status; and
a sensor input that indicates condensation on the transparent pane.

6. The system for heating the automotive glazing of any one of the preceding claims, wherein the control unit activates one or more of the heating zones from among the plurality of heating zones based on an input received via a user interface.

7. The system for heating the automotive glazing of claim 6, wherein the input includes an identification of a heating zone from among the plurality of heating zones.

8. The system for heating the automotive glazing of any one of the preceding claims, wherein at least one of the heating zones from among the plurality of heating zones is positioned in alignment with a field of view of a camera.

9. The system for heating the automotive glazing of any one of the preceding claims, wherein the plurality of heating zones include a first heating zone and a second heating zone, the first heating zone corresponding with a first activation criteria, and the second heating zone corresponding with a second activation criteria.

10. The system for heating the automotive glazing of any one of the preceding claims, wherein the automotive glazing includes a windshield.

11. The system for heating the automotive glazing of any one of the preceding claims, wherein the transparent pane comprises an outer surface and an inner surface, and wherein the coating is applied upon the inner surface of the transparent pane; or optionally
wherein the plurality of heating zones include a first heating zone that encompasses a substantial portion of the transparent pane, and a second heating zone, wherein the second heating zone is smaller in size relative to the first heating zone.

12. A method for heating automotive glazing comprising:
providing an automotive glazing element comprising a transparent pane and a layer applied upon a surface of the transparent pane, wherein the layer is segmented into a plurality of heating zones;
electrically connecting one or more bus bars to one or more heating zones from among the plurality of heating zones;
receiving an input from a control unit to activate one or more heating zones from among the plurality of heating zones;
supplying electrical power to the respective bus bars associated with the one or more heating zones to be activated based on the input from the control unit; and
activating the one or more heating zones by heating the coating in specific areas corresponding to the activated heating zones.

13. The method for heating automotive glazing of claim 12, wherein the one or more heating zones are controlled independently; or optionally wherein the layer includes a metallic coating; or optionally wherein at least one of the heating zones from among the plurality of heating zones is positioned in alignment with a field of view of a camera; wherein the coating is segmented into the plurality of heating zones by one or more of laser ablation, mechanical etching, and masking techniques.

14. The method for heating automotive glazing of claim 13, wherein the receiving the input from the control unit to activate the one or more heating zones from among the plurality of heating zones includes:
detecting an activation criteria; and
causing the control unit to activate the one or more heating zones based on the activation criteria; and optionally
wherein the activation criteria includes sensor inputs that indicate condensation on the transparent pane.

15. A method of manufacturing an automotive glazing assembly comprising:
providing an automotive glazing element comprising a transparent pane and a layer applied upon a surface of the transparent pane;
segmenting the layer into a plurality of heating zones by one or more of laser ablation, mechanical etching, and masking techniques;
electrically connecting one or more bus bars to one or more heating zones from among the plurality of heating zones; and
configuring a control unit to activate the one or more heating zones from among the plurality of heating zones by providing electrical power to the one or more bus bars associated with the one or more heating zone.
